# FASCICULE DE BREVET EUROPEEN

(11) **EP 1 108 169 B1**
(45) Date de publication et mention de la délivrance du brevet: **10.03.2004**
(21) Numéro de dépôt: 00949582.1
(22) Date de dépôt: 29.06.2000
(51) Int. Cl.: F16H 63/30, F16H 61/32

(54) **ACTIONNEUR ELECTROMECANIQUE POUR BOITE DE VITESSE DE VEHICULE AUTOMOBILE**
ELEKTRISCH GESTEUERTE GETRIEBESCHALTEINRICHTUNG FÜR EIN KRAFTFAHRZEUG
ELECTROMECHANICAL ACTING ELEMENT FOR A MOTOR VEHICLE GEARBOX

(30) Priorité: 30.06.1999 FR 9908386
(43) Date de publication de la demande: 20.06.2001
(73) Titulaire: VALEO EMBRAYAGES s.a.s., 80009 Amiens Cedex 1 (FR)
(72) Inventeur: LEBAS, Gilles, F-80090 Amiens (FR); MAUREL, Hervé, F-75018 Paris (FR); VALERO, Thomas, F-75018 Paris (FR)
(74) Mandataire: Lemaire, Marc
(86) Numéro de dépôt international: PCT/FR2000/001833
(87) Numéro de publication internationale: WO 2001/002758

(56) Documents cités:
- EP-A- 0 600 620
- GB-A- 2 207 715
- US-A- 6 003 649

## Description

La présente invention concerne un actionneur électromécanique à effort contrôlé.

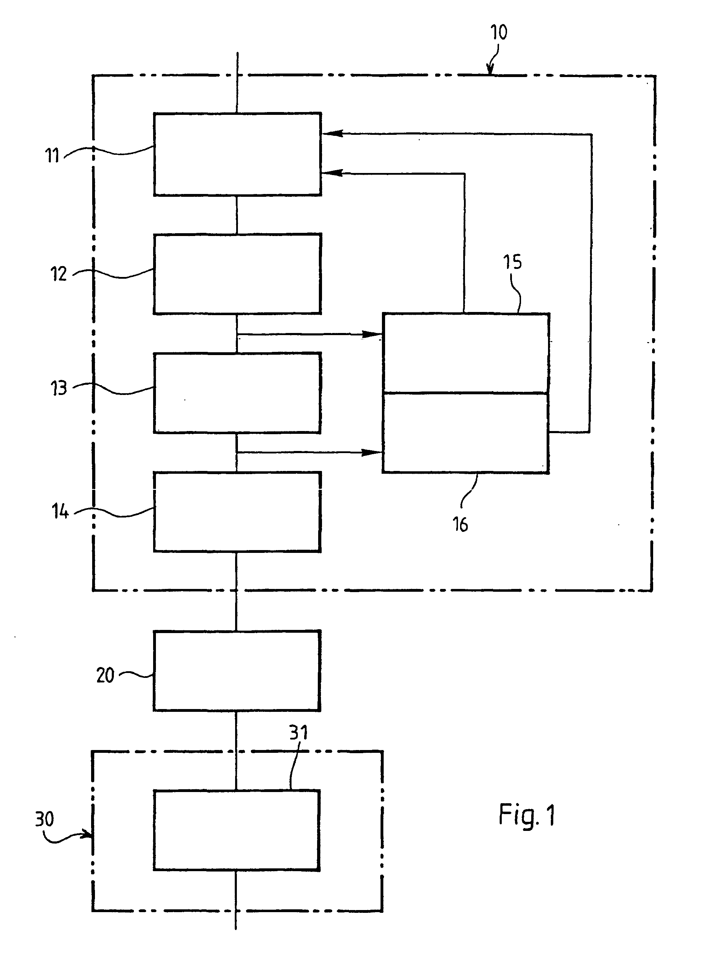

En se reportant à la figure 1, on voit un schéma synoptique montrant un actionneur électromécanique 10 adapté à actionner un élément de commande 31 d'un récepteur 30 par l'intermédiaire d'un élément de liaison 20.

L'actionneur 10 comprend une électronique 11, de commande et de puissance, pour l'alimentation d'une unité motrice 12 qui comporte un moyen moteur et un moyen de transformation de mouvement et est adaptée à déplacer un élément d'actionnement 14 par l'intermédiaire d'un élément élastique déformable 13, l'élément d'actionnement 14 agissant directement sur l'élément de liaison 20 qui assure la liaison entre l'actionneur 10 et le récepteur 30.

L'électronique 11 comprend par exemple un calculateur à processeur numérique et à mémoire, multiplexé ou non, et une électronique de puissance adaptée au moyen moteur de l'unité motrice 12.

Le moyen moteur de l'unité motrice 12 peut être un moteur électrique tournant à courant continu, avec ou sans balais, ou un moteur électrique linéaire, ou un ou plusieurs électro-aimants, ou autre.

Le moyen de transformation de mouvement de l'unité motrice 12 peut être un réducteur à train d'engrenages droits, parallèles ou épicycloïdaux, ou un réducteur du type à vis sans fin associée à une roue dentée ou du type vis écrou, avec ou sans billes ; ce peut être également un transformateur de mouvement du type à excentrique ou à biellette sur corde de roue dentée ; la sortie du moyen de transformation de mouvement peut être rotative, linéaire ou du type à bielle.

L'élément élastique déformable 13 peut être un ressort de compression ou d'extension ; il peut être droit ou courbe, à section élastique constante ou variable ; ce peut être également un ressort de torsion, du type pince à linge ou autre, ou une pièce en élastomère ou analogue.

L'élément d'actionnement 14 peut être par exemple un levier rotatif ou une tige poussante ou tirante, ou autre.

L'élément de liaison 20, au récepteur 30, peut être par exemple un câble, une biellette ou tout type d'accouplement autre.

L'élément de commande 31, du récepteur 30, est par exemple un levier de commande mobile, en rotation ou en translation.

Le récepteur 30 est un récepteur qui reçoit de son élément de commande 31 un effort de commande qui doit être maîtrisé ; c'est le cas par exemple d'une boîte de vitesses de véhicule automobile dont l'élément de commande 31 est déplacé pour engager un rapport de vitesses.

Une telle application est par exemple décrite dans la demande de brevet français déposée le 28 avril 1999 sous le numéro EP 0 990 098 à laquelle il conviendra de se reporter pour plus de détails.

Lors de son déplacement en vue de passer un rapport de vitesse, l'élément de commande 31 passe par une position caractéristique correspondant au mur de synchronisation : c'est à partir de cette position, d'une part, que l'effort transmis par l'élément de commande 31 doit être maîtrisé et, d'autre part, que l'élément élastique déformable 13 accumule de l'énergie. Lorsque les synchroniseurs ont synchronisé les vitesses de rotation des arbres primaire et secondaire de la boîte de vitesses, le crabotage du rapport de vitesse désiré doit être effectué, pour transmettre le couple, un asservissement en position, et non plus en effort, étant alors nécessaire.

Dans la demande de brevet déjà citée, on a décrit un actionneur électromécanique pour boîte de vitesses mécanique, notamment pour véhicule automobile, destiné à assurer les commandes automatiques de la sélection et du passage des vitesses, du type comportant au moins une unité motrice à motoréducteur propre à fournir l'énergie mécanique nécessaire auxdites commandes.

Le document GB 2 207 715 qui montre les caractéristiques du préambule de la revendication 1, décrit un actionneur électromécanique comportant un interrupteur de fin de course comprenant un rhéostat le long duquel se déplace un contact mobile solidaire d'une capsule définissant le temps pendant lequel un moteur est alimenté.

Par l'expression "sélection", d'une vitesse, on entend désigner la manoeuvre correspondant à un déplacement latéral du levier de vitesses sur la grille des vitesses, tandis que par l'expression "passage", d'une vitesse, on entend désigner la manoeuvre correspondant à un déplacement longitudinal de ce levier, pour l'engagement de la vitesse choisie. Ce passage longitudinal, en avant ou en arrière, s'accompagne généralement de l'actionnement des verrous de synchronisation et requiert donc une certaine dépense d'énergie, nécessaire aussi, quoique à un degré moindre, pour les manoeuvres de sélection.

L'actionneur électromécanique du genre en question peut être installé d'origine sur les véhicules neufs, ou être installé après coup sur des véhicules déjà équipés d'une commande d'engagement des vitesses manuelle à levier classique, sans nécessiter une modification de la commande existante.

Un tel actionneur permet d'optimiser le séquencement des déplacements en aidant à une présélection, et d'aider également le conducteur à surmonter les efforts nécessités par la manoeuvre des verrous de synchronisation lors du passage des vitesses.

On a fait en sorte que puissent être détectées automatiquement la fin de la sélection ainsi que la fin du passage des vitesses afin d'arrêter automatiquement l'unité motrice à motoréducteur lorsque l'engagement de la vitesse souhaitée est achevé.

A cet effet, cette unité motrice est associée d'une part à un système élastique d'emmagasinage de son énergie mécanique, tel que l'élément élastique déformable 13, ce système étant adapté à restituer cette énergie de l'unité motrice pour assurer sélectivement lesdites commandes automatiques par l'intermédiaire d'une timonerie, respectivement de sélection ou de passage, et d'autre part à un interrupteur de fin de course propre à provoquer l'apparition d'un signal représentatif, selon le cas, de l'état comprimé (emmagasinage d'énergie) dudit système élastique, de l'arrivée en butée de ladite unité motrice, et du fait que la sélection ou l'engagement du rapport souhaité de la boîte a bien été obtenu.

Grâce au système élastique d'emmagasinage d'énergie, les manoeuvres nécessitées par l'engagement des vitesses sont uniformisées et rendues plus rapides tout en ne nécessitant pas une puissance importante pour l'actionnement : l'unité motrice à motoréducteur fournit l'énergie nécessaire aux manoeuvres des commandes à plus faible puissance, par emmagasinage progressif de l'énergie dans le système élastique avant détente rapide. Cette énergie n'est libérée que lorsque la puissance est suffisante pour produire l'engagement franc de la vitesse sélectionnée, ou après le temps nécessaire aux synchroniseurs pour effectuer la synchronisation des vitesses, sans nécessiter un accroissement momentané de la puissance de l'unité motrice, et sans provoquer son ralentissement.

Le système élastique, dont la précharge et la raideur sont connues, permet ainsi de mieux maîtriser les efforts de sélection de même que les efforts de synchronisation lors du passage des vitesses, en coopération avec un capteur de position de l'unité motrice, tel que le capteur de position 15 de la figure 1, l'unité motrice à motoréducteur n'ayant pas à être asservie en effort, mais seulement en position ; le système élastique uniformise automatiquement les efforts demandés à l'unité motrice. L'unité motrice n'a pas non plus à s'arrêter lorsqu'elle rencontre la résistance de synchronisation, d'où un gain de temps.

Quant à l'interrupteur de fin de course, il fournit l'information de mise en butée de l'unité motrice, ce qui permet l'apprentissage de la grille, soit lors de la sélection, soit lors du passage d'une vitesse, ce qui indique l'exécution de ce déplacement, c'est-à-dire que le rapport a bien été engagé, ou encore donne l'indication que le système élastique a emmagasiné de l'énergie, au cours de la présélection ou juste avant le passage de la vitesse.

En association avec le capteur de position de l'unité motrice lors du passage d'une vitesse, l'interrupteur de fin de course fournit encore une information sur la position de la synchronisation et par suite sur l'usure des verrous de synchronisation.

Il est possible également de mettre en oeuvre deux unités motrices à motoréducteur, l'une pour la commande automatique desdites sélections, l'autre pour la commande automatique desdits passages, ces deux unités motrices à motoréducteur étant commandées chacune par un module de puissance distinct. Mais, bien entendu, une seule unité motrice peut commander sélectivement l'une ou l'autre des deux timoneries.

Dans ce cas, on met en oeuvre une seule unité motrice commandée par un seul module de puissance, cette unité motrice pouvant être accouplée à l'un ou à l'autre de deux réducteurs par un commutateur mécanique, l'un de ces réducteurs étant adapté à assurer la commande de la sélection des vitesses et l'autre à assurer leur passage, par l'intermédiaire de leurs timoneries respectives.

Sur un véhicule à boîte de vitesses manuelle automatisée, il est très important de rendre aussi constante que possible la durée de la rupture du couple moteur lors d'un changement de rapport afin que le conducteur s'habitue au comportement de son véhicule et ne soit pas surpris par des durées de synchronisation aléatoires.

Pour que la durée de synchronisation soit constante, il est nécessaire d'adapter l'effort à appliquer sur le synchroniseur du rapport que l'on souhaite engager, du fait que les conditions dans lesquelles s'effectue le changement de rapport sont multiples, fonctions par exemple du rapport initial, du rapport final, de la vitesse du véhicule en début de changement de rapport.

Par ailleurs, les synchroniseurs de boîte de vitesses ont généralement des caractéristiques identiques deux à deux, le synchroniseur de première étant par exemple identique au synchroniseur de seconde ; toutefois, leurs caractéristiques, d'une ligne de sélection à une autre, sont différentes et fonctions par exemple de la matière ou du diamètre moyen du cône de frottement ; l'effort à appliquer sur ceux-ci est donc fonction du rapport désiré.

Ainsi, l'invention a pour but de proposer un actionneur du type ci-dessus permettant de déplacer l'élément de commande du récepteur en régulant un effort sur cet élément de commande, notamment lorsque celui-ci est bloqué par un effort variant selon les conditions initiales du déplacement, et ce sans utilisation d'un capteur d'effort dont la réalisation est onéreuse et, dans le cas d'une application à un véhicule automobile, peu adapté à cette application.

Dans le cas d'une boîte de vitesses de véhicule automobile par exemple, un tel actionneur permettra de réguler les efforts nécessaires à une synchronisation optimale des rapports lors d'un changement de vitesse ; dans ce cas également, l'élément élastique déformable, se déclenchant sur le mur de synchronisation, est calculé en sorte que son énergie accumulée est fonction de plusieurs paramètres tels que la position, dans la boîte de vitesses, des cônes des synchroniseurs, les caractéristiques des synchroniseurs, donc du rapport à engager, l'énergie nécessaire à l'annulation de l'écart des vitesses entre le rapport initial et le rapport désiré, la température de la boîte de vitesses, et/ou autres paramètres.

Pour la clarté de l'exposé, on a évoqué l'application de l'invention à une boîte de vitesses manuelle automatisée mais, comme on l'aura compris, l'invention est applicable à tout système motorisé réalisant un déplacement selon une course bien définie et comportant, dans la chaîne de transmission, un élément élastique, qu'il soit faiblement élastique ou fortement élastique ; grâce à l'invention, par une mesure différentielle de positions, on réalise de manière simple un capteur d'effort ou de couple ; comme autres exemples d'application de l'invention, on peut citer notamment un lève-vitre électrique de véhicule anti-pincement, un frein à câble, un dispositif de fermeture de porte ou de portail, un outil de serrage électromécanique, cette liste n'étant pas exhaustive.

Selon l'invention, un actionneur électromécanique du type comportant une électronique de commande et de puissance, pour l'alimentation d'une unité motrice qui comporte un moyen moteur et un moyen de transformation de mouvement et qui est adaptée à déplacer un élément d'actionnement par l'intermédiaire d'un élément élastique déformable, l'élément d'actionnement étant destiné à agir directement sur un élément de liaison assurant la liaison entre l'actionneur et un récepteur, ledit actionneur comportant également un capteur de position, dit premier capteur de position, adapté à fournir à l'électronique des informations sur la position de l'unité motrice, est caractérisé par le fait qu'un second capteur de position est prévu, adapté à fournir à l'électronique des informations sur la position de l'élément élastique déformable.

Ainsi, la maîtrise de l'effort appliqué sur l'élément de commande du récepteur est obtenue en donnant à l'électronique une consigne de position fonction de la raideur et de la précharge prédéfinies de l'élément élastique déformable.

Dans le cas d'un actionneur de boîte de vitesses par exemple, permettant de réaliser le passage des vitesses, l'élément élastique déformable permet d'appliquer d'abord un effort quasi constant par un asservissement en position, puis de faire varier l'effort sur le synchroniseur en jouant sur la position de l'unité motrice ; pour ce faire, la courbe effort-course prédéfinie de l'élément élastique déformable n'est pas monotone mais ici sa pente est plus grande dans la zone autorisée pour le crabotage.

Comme on le comprend aisément, grâce à la détente de l'élément élastique déformable, une fois la synchronisation assurée, le crabotage est réalisé rapidement ; en outre, lorsque l'élément de commande bute contre le mur de synchronisation, le choc est atténué.

Avantageusement, les capteurs de position comportent chacun un curseur adapté à coopérer avec une piste, les deux pistes étant parallèles.

De préférence, les capteurs de position comportent chacun un curseur, les deux curseurs étant adaptés à coopérer avec une piste commune.

Avantageusement, les informations de position transmises à l'électronique reflètent la position des curseurs sur la ou les pistes, lesdits curseurs étant déplacés selon des trajectoires parallèles l'une à l'autre.

De préférence, les pistes des deux capteurs sont portées par un même support, les extrémités des pistes des deux capteurs étant reliées par des ponts constituant des bornes d'alimentation électrique.

Avantageusement, le curseur du premier capteur de position est adapté à coopérer avec deux pistes, une piste résistive et une piste de retour ou d'information, portées par le support.

De préférence, ie curseur du second capteur de position est adapté à coopérer avec deux pistes, une piste résistive et une piste de retour ou d'information, portées par le support.

Selon une première forme de réalisation, l'unité motrice est adaptée à déplacer l'élément de liaison en rotation.

Avantageusement, l'unité motrice est constituée d'un moteur électrique et d'un réducteur à vis sans fin engrenant avec un secteur circulaire en forme de plaque, dite première plaque, montée à rotation autour d'un axe.

De préférence, l'élément d'actionnement est en forme de plaque, dite seconde plaque, solidaire dudit axe, l'élément élastique déformable étant un ressort précomprimé monté entre les première et seconde plaques grâce à des ouvertures qu'elles présentent et qui sont placées en regard l'une de l'autre.

Selon une autre forme de réalisation, l'unité motrice est adaptée à déplacer l'élément de liaison en translation.

Avantageusement, l'unité motrice est constituée d'un moteur électrique dont l'arbre de sortie est taillé en vis sans fin avec laquelle coopère un écrou immobilisé en rotation mais pouvant être déplacé axialement.

De préférence, l'écrou, ou une noix qui l'entoure et qui en est solidaire, est entouré(e) d'une cage montée coulissante par rapport à lui (elle) et prolongée par une queue constituant l'élément d'actionnement, des ressorts étant montés comprimés dans des logements en regard que présentent la cage et l'écrou, ou la noix.

Avantageusement, les capteurs de position comprennent une piste résistive commune fixe avec laquelle coopèrent deux curseurs, un curseur porté par l'écrou, ou la noix, et un curseur porté par la cage.

Selon une variante, les capteurs de position comprennent chacun une piste résistive fixe avec laquelle coopère un curseur, l'un porté par l'écrou, ou la noix, l'autre porté par la cage.

Selon une autre variante, les capteurs de position comprennent chacun une piste résistive, les deux pistes étant portées par un support solidaire de l'écrou, ou de la noix, et coopérant chacune avec un curseur dont l'un est fixe et dont l'autre est porté par la cage.

Il est à noter que grâce à la présence de deux capteurs de position, dont le coût est réduit par la présence d'éléments communs ou identiques, il est possible de détecter la défectuosité de l'un d'eux si une incohérence apparaît entre les informations qu'ils délivrent : il est alors possible par exemple de passer en un mode dégradé ne mettant en oeuvre qu'un seul capteur de position.

La présente invention a également pour objet l'application de l'actionneur électromécanique ci-dessus à la commande automatique de la sélection et/ou du passage des vitesses d'une boîte de vitesses notamment de véhicule automobile.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est un schéma synoptique montrant un actionneur 10 selon l'invention adapté à la commande d'un récepteur 30 ;
- la figure 2 montre schématiquement partiellement en coupe axiale un actionneur selon l'invention ;
- la figure 3 est une vue selon III-III de la figure 2 ;
- la figure 4 est une vue selon IV-IV de la figure 3 montrant les capteurs seuls ;
- la figure 5 est une vue analogue à la figure 2 et montre une variante ;
- la figure 6 est une vue selon VI-VI de la figure 5 ;
- les figures 7 et 8 sont analogues à la figure 5 et représentent chacune une variante.

Sur le schéma de la figure 1, on voit en 16 le second capteur de position qui, selon l'invention, est associé au premier capteur de position 15.

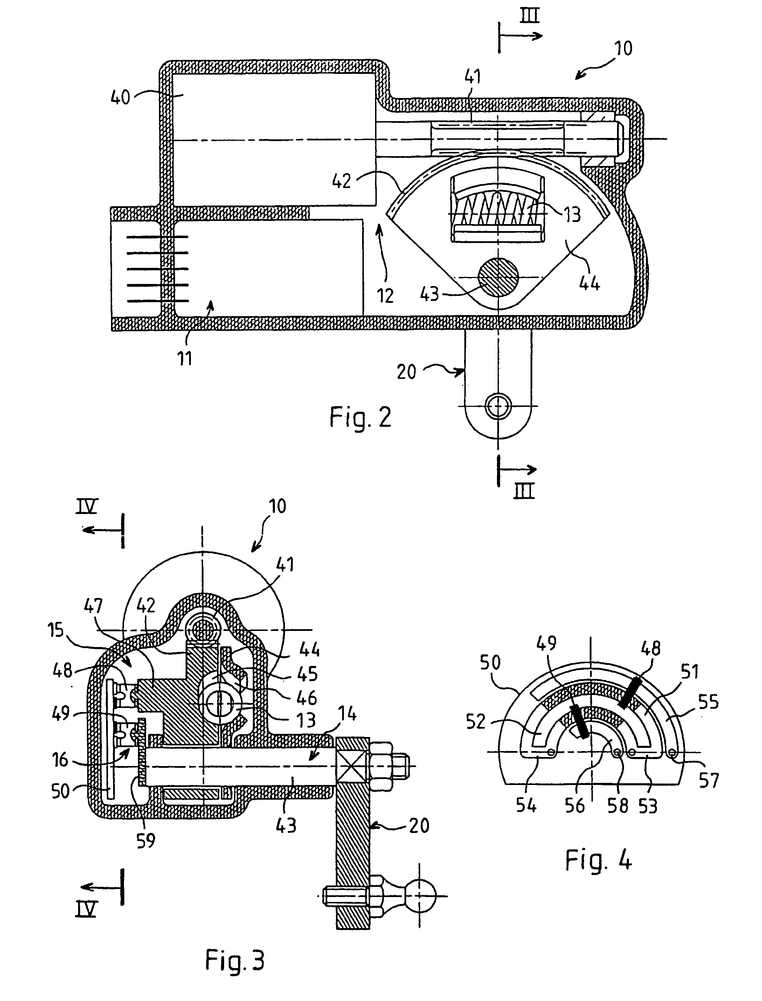

Les figures 2 à 4 montrent un exemple d'actionneur selon l'invention à sortie rotative.

Ici, l'actionneur 10 comprend une électronique 11 de commande et de puissance associée à une unité motrice 12 constituée d'un moteur électrique 40 et d'un réducteur à vis sans fin 41 engrenant avec un secteur circulaire 42, à dents périphériques, monté à rotation autour d'un axe 43.

Le secteur denté 42 est en forme de piaque, dite première plaque, qui peut pivoter autour de l'axe 43 qui sert également d'axe de rotation à une seconde plaque 44, également en forme de secteur circulaire, solidarisée à l'axe 43 par exemple par soudage.

La plaque 44 et l'axe 43 constituent l'élément d'actionnement 14, de l'actionneur 10, qui agit sur l'élément de commande 31 du récepteur, non représentés, par l'intermédiaire de l'élément de liaison 20, ici en forme de manivelle fixée en bout de l'axe 43.

Dans chacune des plaques 42 et 44, qui peuvent donc pivoter librement l'une par rapport à l'autre autour de leur axe commun 43, est ménagée une ouverture, respectivement 45 et 46. Ces ouvertures 45 et 46 sont en regard l'une de l'autre de sorte qu'elles peuvent recevoir un ressort précomprimé 13 constituant l'élément élastique déformable de l'actionneur 10. A l'une de ses extrémités, ce ressort 13 est maintenu en place par deux pattes verticales de la plaque 42, tandis qu'à son autre extrémité il est maintenu en place par deux pattes horizontales de la plaque 44. Ainsi le ressort 13 ne risque pas d'être soumis à des efforts de basculement.

Grâce à cette disposition, on voit que la rotation de la vis sans fin 41 entraîne en rotation la plaque 42, ce qui comprime le ressort 13, la plaque 44 restant bloquée dans sa position par la force résistante de l'élément de liaison 20 correspondante, qui s'exerce sur l'axe 43. Lorsque le ressort 13 est suffisamment comprimé pour surmonter l'effort résistant de l'élément de liaison 20, il se détend en entraînant dans sa rotation la plaque 44 et l'axe 43, ce qui effectue la manoeuvre voulue au sein du récepteur.

Conformément à l'invention, l'actionneur 10 comprend deux capteurs de position, un premier capteur de position 15 et un second capteur de position 16.

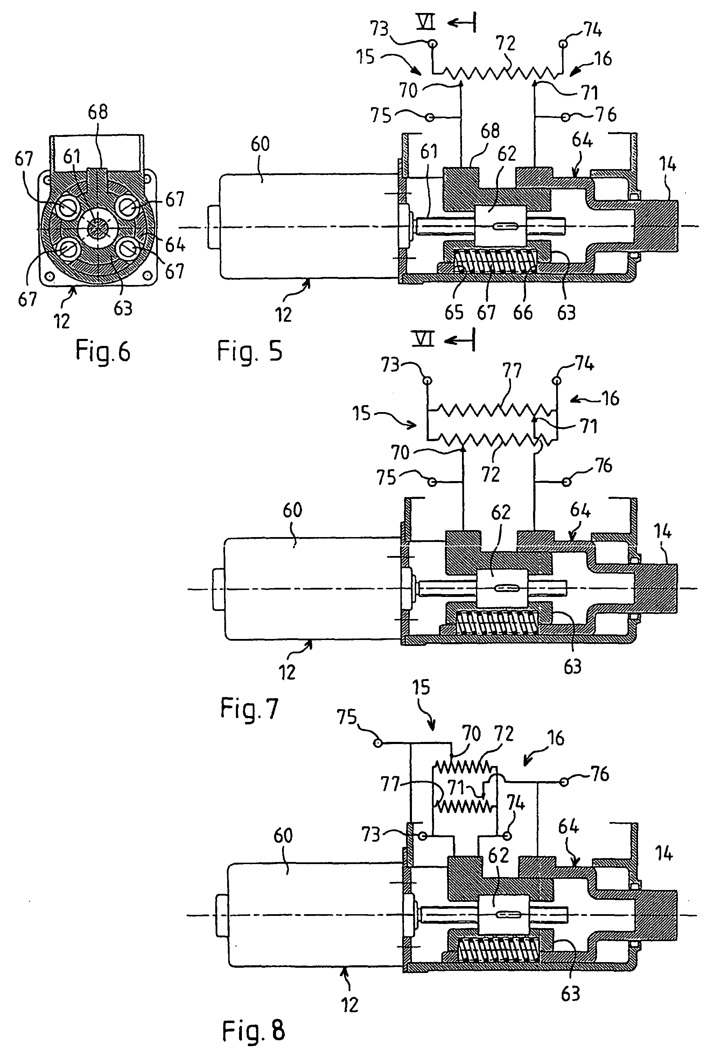

Le premier capteur de position 15 comporte un curseur 48 porté par un pion 47 axial solidaire de la première plaque 42, ici d'un seul tenant avec elle, adapté à coopérer par contact avec deux pistes circulaires concentriques, figure 4, une piste résistive 51 et une piste de retour ou d'information 55 dont une extrémité 57 porte une borne de mesure de position, les pistes 51 et 55 étant portées par un support 50.

Le second capteur de position 16 est conçu de manière analogue ; son curseur 49 est porté par un bras radial 59 en bout de l'axe 43 et adapté à coopérer avec des pistes circulaires 52 résistive et 56 de retour ou d'informations avec sa borne 58 de mesure ; ces deux pistes 52 et 56 sont portées par le support 50 ; les extrémités des pistes résistives 51 et 52 sont reliées par des ponts 53, 54 constituant des bornes d'alimentation électrique.

Ensuite l'électronique 11 peut commander par l'intermédiaire du moteur 40 le retour des plaques 42 et 44 vers leurs positions initiales respectives.

Dans le mode de réalisation des figures 5 et 6, on a représenté une variante dans laquelle l'élément de liaison 20, au lieu d'être déplacé en rotation, est déplacé en translation, le principe général de fonctionnement étant cependant le même dans les deux cas.

Ici, l'unité motrice 12 comprend un moteur électrique 60 dont l'arbre de sortie est taillé en vis sans fin 61 avec laquelle coopère un écrou 62 entouré d'une noix 63 qui en est solidaire ; la noix 63 présente à sa périphérie un doigt radial 68 adapté à se déplacer dans une rainure axiale d'un bâti fixe que comporte l'actionneur ; ainsi, la noix 63 et l'écrou 62 sont immobilisés en rotation mais peuvent se déplacer axialement dans un sens ou dans l'autre, selon le sens de rotation de la vis 61. Bien entendu, l'écrou 62 et la noix 63 peuvent être d'une seule pièce.

La noix 63 est entourée d'une cage 64 montée coulissante par rapport à la noix 63 et prolongée par une queue 14 constituant l'élément d'actionnement de l'actionneur.

Des logements en regard, 65 de la cage 64 et 66 de la noix 63, contiennent un ensemble de ressorts 67 comprimés, ledit ensemble de ressorts constituant l'élément élastique déformable 13 de l'actionneur.

Ici, les capteurs de position 15 et 16 comprennent une piste résistive 72 commune, fixe, s'étendant entre deux plots d'alimentation 73,74 et avec laquelle coopèrent deux curseurs, un curseur 70 porté par la noix 63 avec laquelle il se déplace et un curseur 71 porté par la cage 64 avec laquelle il se déplace ; on voit en 75 et 76 les bornes de mesure de position des capteurs 15 et 16, respectivement.

La variante de la figure 7 est identique à la précédente sauf en ce qui concerne les pistes résistives fixes qui sont ici au nombre de deux, la piste 72 et la piste 77, portées par un même support, chacune étant affectée à l'un des capteurs de position.

Selon la variante de la figure 8, les pistes 72 et 77 sont également portées par un même support mais celui-ci est solidaire de la noix 63, donc mobile avec elles, tandis que le curseur 70 du premier capteur 15 est fixe ; dès lors, le premier capteur 15 donne des informations sur la position de la noix 63 tandis que le second capteur 16 donne des informations sur la position de la cage 64 relativement à celle de la noix 63.

## Revendications

1. Actionneur électromécanique du type comportant une électronique (11) de commande et de puissance, pour l'alimentation d'une unité motrice (12) qui comporte un moyen moteur (40, 60) et un moyen de transformation de mouvement (41-42, 61-62) et qui est adaptée à déplacer un élément d'actionnement (14) par l'intermédiaire d'un élément élastique déformable (13), l'élément d'actionnement (14) étant destiné à agir directement sur un élément de liaison (20) assurant la liaison entre l'actionneur (10) et un récepteur (30), ledit actionneur comportant également un capteur de position, dit premier capteur de position (15), adapté à fournir à l'électronique (11 ) des informations sur la position de l'unité motrice (12), un second capteur de position (16) étant prévu, **caractérisé par le fait que** le second capteur de position (16) est adapté à fournir à l'électronique (11) des informations sur la position de l'élément élastique déformable (13), et que l'électronique (11) de commande est adaptée à connaître l'effort appliqué sur l'élément d'actionnement (14) qui résulte d'une mesure différentielle des positions données des deux capteurs (15, 16), et à maîtriser cet effort en jouant sur la position de l'unité motrice (12)..

2. Actionneur électromécanique selon la revendication 1, **caractérisé par le fait que** les capteurs de position (15,16) comportent chacun un curseur (48,49-70,71) adapté à coopérer avec une piste (51,52-72,77), les deux pistes (51,52-72,77) étant parallèles.

3. Actionneur électromécanique selon la revendication 1, **caractérisé par le fait que** les capteurs de position (15,16) comportent chacun un curseur (70-71), les deux curseurs étant adaptés à coopérer avec une piste (72) commune.

4. Actionneur électromécanique selon l'une des revendications 2 ou 3, **caractérisé par le fait que** les informations de position transmises à l'électronique (11) reflètent la position des curseurs (48,49-70,71) sur la ou les pistes (72,77), lesdits curseurs (48,49-70,71) étant déplacés selon des trajectoires parallèles l'une à l'autre.

5. Actionneur électromécanique suivant les revendications 2 et 4 prises conjointement, **caractérisé par le fait que** les pistes (51,52-72,77) sont portées par un même support (50), les extrémités des pistes des deux capteurs étant reliées par des ponts constituant des bornes d'alimentation électrique (53,54-73,74).

6. Actionneur électromécanique suivant la revendication 5, **caractérisé par le fait que** le curseur (48) du premier capteur de position (15) est adapté à coopérer avec deux pistes, une piste résistive (51) et une piste de retour ou d'information (55), portées par le support (50).

7. Actionneur électromécanique suivant la revendication 5, **caractérisé par le fait que** le curseur (49) du second capteur de position (16) est adapté à coopérer avec deux pistes, une piste résistive (52) et une piste de retour ou d'information (56), portées par le support (50).

8. Actionneur électromécanique selon l'une des revendications 1 à 7, **caractérisé par le fait que** l'unité motrice (12) est adaptée à déplacer l'élément de liaison (20) en rotation.

9. Actionneur électromécanique selon la revendication 8, **caractérisé par le fait que** l'unité motrice est constituée d'un moteur électrique (40) et d'un réducteur à vis sans fin (41) engrenant avec un secteur circulaire (42) en forme de plaque, dite première plaque, montée à rotation autour d'un axe (43).

10. Actionneur électromécanique selon la revendication 9, **caractérisé par le fait que** l'élément d'actionnement (14) est en forme de plaque (44), dite seconde plaque, solidaire dudit axe (43), l'élément élastique déformable (13) étant un ressort précomprimé monté entre les première (42) et seconde (44) plaques grâce à des ouvertures (45,46) qu'elles présentent et qui sont placées en regard l'une de l'autre.

11. Actionneur électromécanique selon l'une des revendications 8 à 10 et l'une des revendications 6 ou 7 prises conjointement, **caractérisé par le fait que** le curseur (48, 49) de l'un au moins des capteurs de position (15, 16) est adapté à coopérer avec deux pistes (51,52-55,56) circulaires concentriques.

12. Actionneur électromécanique suivant la revendication 11, **caractérisé par le fait que** les quatre pistes (51, 52, 55, 56) avec lesquelles coopèrent les deux curseurs (48, 49) sont concentriques.

13. Actionneur électromécanique suivant l'une des revendications 1 à 7, **caractérisé par le fait que** l'unité motrice (12) est adaptée à déplacer l'élément de liaison (20) en translation.

14. Actionneur électromécanique selon la revendication 13, **caractérisé par le fait que** l'unité motrice est constituée d'un moteur électrique (60) dont l'arbre de sortie est taillé en vis sans fin (61) avec laquelle coopère un écrou (62) immobilisé en rotation mais pouvant être déplacé axialement.

15. Actionneur électromécanique selon la revendication 14, **caractérisé par le fait que** l'écrou (62), ou une noix (63) qui l'entoure et qui en est solidaire, est entouré(e) d'une cage (64) montée coulissante par rapport à lui (elle) et prolongée par une queue constituant l'élément d'actionnement (14), des ressorts (67) étant montés comprimés dans des logements en regard (65,63) que présentent la cage (64) et l'écrou (62), ou la noix (63).

16. Actionneur électromécanique selon la revendication 15, **caractérisé par le fait que** les capteurs de position (15,16) comprennent une piste résistive (72) commune fixe avec laquelle coopèrent deux curseurs, un curseur (70) porté par l'écrou (62), ou la noix (63), et un curseur (71) porté par la cage (64).

17. Actionneur électromécanique selon la revendication 15, **caractérisé par le fait que** les capteurs de position (15,16) comprennent chacun une piste résistive (72,77) fixe avec laquelle coopère un curseur, l'un (70) porté par l'écrou (62), ou la noix (63), l'autre (71) porté par la cage (64).

18. Actionneur électromécanique selon la revendication 15, **caractérisé par le fait que** les capteurs de position (15, 16) comprennent chacun une piste résistive (72,77), les deux pistes (72,77) étant portées par un support solidaire de l'écrou (62), ou de la noix (63), et coopérant chacune avec un curseur dont l'un (70) est fixe et dont l'autre (71) est porté par la cage (64).

19. Application de l'actionneur électromécanique selon l'une des revendications 1 à 18 à la commande automatique de la sélection et/ou du passage des vitesses d'une boîte de vitesses notamment de véhicule automobile.

## Patentansprüche

1. Elektromechanische Betätigungseinrichtung, umfassend eine Steuerund Leistungselektronik (11) für die Speisung einer Antriebseinheit (12), die ein Antriebsmittel (40, 60) und ein Bewegungsumwandlungsmittel (41-42, 61-62) umfasst und durch die über ein verformbares elastisches Element (13) ein Betätigungselement (14) verschiebbar ist, wobei das Betätigungselement (14) dazu bestimmt ist, direkt auf ein Verbindungselement (20) einzuwirken, das die Verbindung zwischen der Betätigungseinrichtung (10) und einem Nehmer (30) herstellt, wobei die Betätigungseinrichtung außerdem einen als erster Positionsgeber (15) bezeichneten Positionsgeber umfasst, durch den an die Elektronik (11) Informationen ü ber d ie P osition d er A ntriebseinheit ( 12) lieferbar sind, und wobei ein zweiter Positionsgeber (16) vorgesehen ist, **dadurch gekennzeichnet , dass** der zweite Positionsgeber (16) angepasst ist, an die Elektronik (11) Informationen über die Position des verformbaren elastischen Elements (13) zu liefern, und dass die Leistungselektronik angepasst ist, die auf das Betätigungselement (14) ausgeübte Kraft zu erkennen, die aus einer Differenzmessung der von den beiden Positionsgebern (15, 16) gelieferten Positionen resultiert, und diese Kraft durch Einwirken auf die Position der Antriebseinheit (12) zu kontrollieren.

2. Elektromechanische Betätigungseinrichtung nach Anspruch 1, **dadurch gekennzeichnet , dass** die Positionsgeber (15, 16) jeweils einen Gleitkontakt (48, 49-70, 71) umfassen, der geeignet ist, mit einer Bahn (51, 52-72, 77) zusammenzuwirken, wobei die beiden Bahnen (51, 52-72, 77) parallel verlaufen.

3. Elektromechanische Betätigungseinrichtung nach Anspruch 1, **dadurch gekennzeichnet , dass** die Positionsgeber (15, 16) jeweils einen Gleitkontakt (70, 71) umfassen, wobei die b eiden G leitkontakte g eeignet s ind, mit einer gemeinsamen Bahn (72) zusammenzuwirken.

4. Elektromechanische Betätigungseinrichtung nach einem der Ansprüche 2 oder 3, **dadurch gekennzeichnet, dass** die an die Elektronik (11) übertragenen Positionsinformationen die Position der Gleitkontakte (48, 49-70, 71) auf der oder den Bahnen (72, 77) widerspiegeln, wobei die besagten Gleitkontakte (48, 49-70, 71) entlang zueinander parallelen Strecken verschiebbar sind.

5. Elektromechanische Betätigungseinrichtung nach den Ansprüchen 2 und 4, **dadurch gekennzeichnet, dass** die Bahnen (51, 52-72, 77) auf einem einzigen Träger (50) angebracht sind, wobei die Enden der Bahnen der beiden Geber durch Brücken verbunden sind, die elektrische Speiseklemmen (53, 54-73, 74) bilden.

6. Elektromechanische Betätigungseinrichtung nach Anspruch 5, **dadurch gekennzeichnet, dass** der Gleitkontakt (48) des ersten Positionsgebers (15) geeignet ist, mit zwei Bahnen zusammenzuwirken, nämlich mit einer Widerstandsbahn (51) und einer Rückmelde- oder Informationsbahn (55), die auf dem Träger (50) angebracht sind.

7. Elektromechanische Betätigungseinrichtung nach Anspruch 5, **dadurch gekennzeichnet, dass** der Gleitkontakt (49) des zweiten Positionsgebers (16) geeignet ist, mit zwei Bahnen zusammenzuwirken, nämlich mit einer Widerstandsbahn (52) und einer Rückmelde- oder Informationsbahn (56), die auf dem Träger (50) angebracht sind.

8. Elektromechanische Betätigungseinrichtung nach einem der Ansprüche 1 bis 7, **dadurch gekennzeichnet, dass** die Antriebseinheit (12) geeignet ist, das Verbindungselement (20) rotatorisch zu bewegen.

9. Elektromechanische Betätigungseinrichtung nach Anspruch 8, **dadurch gekennzeichnet, dass** die Antriebseinheit eine Elektromotor (40) und einem Schneckengetriebe (41) umfasst, das an einem Kreissektor (42) in Form einer als erste Platte bezeichneten Platte eingreift, die rotatorisch um eine Achse (43) gelagert ist.

10. Elektromechanische Betätigungseinrichtung nach Anspruch 9, **dadurch gekennzeichnet, dass** das Betätigungselement (14) in Form einer als zweite Platte bezeichneten Platte (44) ausgeführt ist, die fest mit der Achse (43) verbunden ist, wobei das verformbare elastische Element (13) eine vorgespannte Druckfeder ist, die zwischen der ersten (42) und der zweiten Platte (44) in Öffnungen (45, 46) eingesetzt ist, die sie aufweisen und die einander gegenüber angeordnet sind.

11. Elektromechanische Betätigungseinrichtung nach einem der Ansprüche 8 bis 10 und einem der Ansprüche 6 oder 7 in Kombination, **dadurch gekennzeichnet , dass** der Gleitkontakt (48, 49) wenigstens eines der Positionsgeber (15, 16) geeignet ist, mit zwei konzentrischen kreisförmigen Bahnen (51, 52 - 55, 56) zusammenzuwirken.

12. Elektromechanische Betätigungseinrichtung nach Anspruch 11, **dadurch gekennzeichnet , dass** die vier Bahnen (51, 52, 55, 56) mit denen d ie b eiden G leitkontakte (48, 4 9) zusammenwirken, konzentrisch sind.

13. Elektromechanische Betätigungseinrichtung nach einem der Ansprüche 1 bis 7, **dadurch gekennzeichnet, dass** die Antriebseinheit (12) geeignet ist, das Verbindungselement (20) geradlinig zu verschieben.

14. Elektromechanische Betätigungseinrichtung nach Anspruch 13, **dadurch gekennzeichnet, dass** die Antriebseinheit einen Elektromotor (60) umfasst, dessen Ausgangswelle als Schnecke (61) ausgebildet ist, mit der eine Mutter (62) zusammenwirkt, die gegen Verdrehung gesichert ist, aber axial verschiebbar ist.

15. Elektromechanische Betätigungseinrichtung nach Anspruch 14, **dadurch gekennzeichnet, dass** die Mutter (62) oder eine Muffe (63), die sie umgibt und die drehfest damit verbunden ist, von einem Gehäuse (64) umgeben ist, das im Verhältnis zu ihr verschiebbar gelagert ist und durch ein Endstück verlängert wird, das das Betätigungselement (14) bildet, wobei Federn (67) zusammengedrückt in gegenüberliegenden Aufnahmen (65, 6 3) e ingesetzt s ind, die das Gehäuse (64) und die Mutter (62) oder die Muffe (63) aufweisen.

16. Elektromechanische Betätigungseinrichtung nach Anspruch 15, **dadurch gekennzeichnet, dass** die Positionsgeber (15, 16) eine ortsfeste gemeinsame Widerstandsbahn (72) umfassen, mit der zwei Gleitkontakte zusammenwirken, nämlich ein an der Mutter (62) oder an der Muffe (64) angebrachter Gleitkontakt (70) und ein am Gehäuse (64) angebrachter Gleitkontakt (71).

17. Elektromechanische Betätigungseinrichtung nach Anspruch 15, **dadurch gekennzeichnet, dass** die Positionsgeber (15, 16) jeweils eine ortsfeste Widerstandsbahn (72, 77) umfassen, mit der ein Gleitkontakt zusammenwirkt, von denen einer (70) an der Mutter (62) oder an der Muffe (63) und der andere (71) am Gehäuse (64) angebracht ist.

18. Elektromechanische Betätigungseinrichtung nach Anspruch 15, **dadurch gekennzeichnet, dass** die Positionsgeber (15, 16) jeweils eine Widerstandsbahn (72, 77) umfassen, wobei die beiden Bahnen (72, 77) auf einem fest mit der Mutter (62) oder der Muffe (63) verbundenen Träger angebracht sind und jeweils mit einem Gleitkontakt zusammenwirken, von denen einer (70) ortsfest und der andere (71) am Gehäuse (64) angebracht ist.

19. Anwendung der elektromechanischen Betätigungseinrichtung nach einem der Ansprüche 1 bis 18 bei der automatischen Steuerung der Gangwahl und/oder des Gangwechsels eines Getriebes, insbesondere eines Kraftfahrzeuggetriebes.

## Claims

1. Electromechanical actuator of the type comprising control and power electronics (11), for supplying a motive unit (12) which comprises a drive means (40, 60) and a movement conversion means (41-42, 61-62) and which is adapted to move an actuation element (14) by means of a deformable elastic element (13), the actuation element (14) being intended to act directly on a connection element (20) providing the connection between the actuator (10) and a receiver (30), the said actuator also comprising a position sensor, referred to as the first position sensor (15), adapted to supply to the electronics (11) information on the position of a motive unit (12), a second position sensor (16) being provided, **characterised by** the fact that the second position sensor (16) is adapted to supply to the electronics (11) information on the position of the deformable elastic element (13), and by the fact that the control electronics (11) is adapted to know the force applied to the actuation element (14) which results from a differential measurement of the given positions of the two sensors (15, 16), and to control this force by acting on the position of the motive unit (12).

2. Electromechanical actuator according to Claim 1, **characterised by** the fact that the position sensors (15, 16) each comprise a slider (48, 49-70, 71) adapted to cooperate with a track (51, 52-72, 77), the two tracks (51, 52-72, 77) being parallel.

3. Electromechanical actuator according to Claim 1, **characterised by** the fact that the position sensors (15, 16) each comprise a slider (70-71), the two sliders being adapted to cooperate with a common track (72).

4. Electromechanical actuator according to one of Claims 2 or 3, **characterised by** the fact that the position information transmitted to the electronics (11) reflects the position of the sliders (48, 49-70, 71) on the track or tracks (72, 77), the said sliders (48, 49-70, 71) being moved along paths parallel to each other.

5. Electromechanical actuator according to Claims 2 and 4 taken conjointly, **characterised by** the fact that the tracks (51, 52-72, 77) are carried by the same support (50), the ends of the tracks of the two sensors being connected by bridges constituting electrical supply terminals (53, 54-73, 74).

6. Electromechanical actuator according to Claim 5, **characterised by** the fact that the slider (48) of the first position sensor (15) is adapted to cooperate with two tracks, a resistive track (51) and a return or information track (55), carried by the support (50).

7. Electromechanical actuator according to Claim 5, **characterised by** the fact that the slider (48) of the second position sensor (16) is adapted to cooperate with two tracks, a resistive track (52) and a return or information track (56), carried by the support (50).

8. Electromechanical actuator according to one of Claims 1 to 7, **characterised by** the fact that the motive unit (12) is adapted to move the connecting element (20) in rotation.

9. Electromechanical actuator according to Claim 8,
**characterised by** the fact that the motive unit consists of an electric motor (40) and a gearbox with a worm (41) meshing with a circular sector (42) in the form of a plate, referred to as the first plate, mounted for rotation about a shaft (43).

10. Electromechanical actuator according to Claim 9, **characterised by** the fact that the actuation element (14) is in the form of a plate (44), referred to as the second plate, integral with the said shaft (43), the deformable elastic element (13) being a precompressed spring mounted between the first (42) and second (44) plates by virtue of openings (45, 46) which they have and which are placed opposite each other.

11. Electromechanical actuator according to one of Claims 8 to 10 and one of Claims 6 or 7 taken conjointly, **characterised by** the fact that the slider (48, 49) of at least one of the position sensors (15, 16) is adapted to cooperate with two concentric circular tracks (51, 52-55, 56).

12. Electromechanical actuator according to Claim 11, **characterised by** the fact that the four tracks (51, 52, 55, 56) with which the two sliders (48, 49) cooperate are concentric.

13. Electromechanical actuator according to one of Claims 1 to 7, **characterised by** the fact that the motive unit (12) is adapted to move the connecting element (20) in translation.

14. Electromechanical actuator according to Claim 13, **characterised by** the fact that the motive unit consists of an electric motor (60) whose output shaft is machined as a worm (61) with which there cooperates a nut (62) which is rotationally immobilised but which can be moved axially.

15. Electromechanical actuator according to Claim 14, **characterised by** the fact that the nut (62), or a head (63) which surrounds it and which is integral with it, is surrounded by a cage (64) mounted so as to slide with respect to it and extended by a shank constituting the actuation element (14), springs (67) being mounted compressed in facing housings (65, 63) which the cage (64) and the nut (62) or head (63) have.

16. Electromechanical actuator according to Claim 15, **characterised by** the fact that the position sensors (15, 16) comprise a fixed common resistive track (72) with which two sliders cooperate, a slider (70) carried by the nut (62) or the head (63), and a slider (71) carried by the cage (64).

17. Electromechanical actuator according to Claim 15, **characterised by** the fact that the position sensors (15, 16) each comprise a fixed resistive track (72, 77) with which a slider cooperates, one (70) carried by the nut (62) or the head (63), the other (71) carried by the cage (64).

18. Electromechanical actuator according to Claim 15, **characterised by** the fact that the position sensors (15, 16) each comprise a resistive track (72, 77), the two tracks (72, 77) being carried by a support fixed to the nut (62) or head (63), and each cooperate with a slider, one (70) of which is fixed and the other (71) of which is carried by the cage (64).

19. Application of the electromechanical actuator according to one of Claims 1 to 18 to the automatic control of the selection and/or change of speed of a gearbox, in particular of a motor vehicle.
